# EUROPEAN PATENT APPLICATION

(11) **EP 3 838 004 A1**
(43) Date of publication of application: **23.06.2021**
(21) Application number: 19217192.4
(22) Date of filing: 17.12.2019
(51) Int. Cl.: A24F 40/00, H02J 50/00

(54) **CHARGING DEVICE AND SMOKING SUBSTITUTE KIT**

(71) Applicant: NERUDIA LIMITED, Liverpool Merseyside L24 9HP (GB)
(72) Inventor: TALBOT, Oliver, Liverpool L24 9HP (GB); WOOD, Callum, Liverpool L24 9HP (GB)
(74) Representative: Mewburn Ellis LLP

(57) **Abstract**

Various embodiments provide a charging device for charging a smoking substitute device. The charging device comprises: a housing having a holder for receiving a smoking substitute device; a wireless charging module which is removably attachable to the housing; a charging assembly for charging the smoking substitute device, the charging assembly including: a first connection interface configured to connect to the smoking substitute device when the smoking substitute device is received in the holder, and a second connection interface configured to connect to the wireless charging module when the wireless charging module is attached to the housing.

## Description

### Field of the Invention

The present invention relates to a charging device for a smoking substitute device and a kit including both the charging device and the smoking substitute device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and with combustible tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. There are a number of different categories of smoking substitute devices, each utilising a different smoking substitute approach.

One approach is the so-called "vaping" approach, in which a vaporisable liquid, typically referred to (and referred to herein) as "e-liquid", is heated by a heating device (referred to herein as an electronic cigarette or "e-cigarette" device) to produce an aerosol vapour which is inhaled by a user. The e-liquid typically includes a base liquid as well as nicotine and/or a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute devices, which typically have a sealed tank and heating element. The tank is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, that consumable is disposed of. The main body can be reused by connecting it to a new, replacement, consumable. Another subset of closed system vaping smoking substitute devices are completely disposable, and intended for one-use only.

There are also "open system" vaping smoking substitute devices which typically have a tank that is configured to be refilled by a user. In this way the entire device can be used multiple times.

An example vaping smoking substitute device is the myblu™ e-cigarette. The myblu™ e-cigarette is a closed system which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heater, which for this device is a heating filament coiled around a portion of a wick. The wick is partially immersed in the e-liquid, and conveys e-liquid from the tank to the heating filament. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Where a smoking substitute device includes a rechargeable power source, such systems can be used in combination with a charging cable or charging device. The charging cable or charging device are connectable to the smoking substitute device to facilitate recharging of the rechargeable power source.

There is a continuing need to improve the manner in which smoking substitute devices with rechargeable power sources are charged, and the devices used for such charging.

The present invention has been devised in light of the above considerations.

### Summary of the Invention

At its most general, the present invention relates to a charging device for charging a smoking substitute device. The charging device comprises a housing having a holder for receiving a smoking substitute device. The charging device comprises a wireless charging module which is removably attachable to the housing. Thus, advantageously, the functionality of the charging device can be upgraded by attaching the wireless charging module. This can allow a user to selectively add, or remove, the wireless charging functionality to their charging device, as required. The functionality of the charging device can be upgraded as new technology is developed, without the need to replace the entire charging device. This reduces waste of electrical equipment.

It is to be understood that the smoking substitute device may or may not include a consumable. That is, the smoking substitute device may include a main body with or without a consumable.

According to a first aspect of the present invention, there is provided a charging device for charging a smoking substitute device, the charging device comprising: a housing having a holder for receiving a smoking substitute device; a wireless charging module which is removably attachable to the housing; a charging assembly for charging the smoking substitute device, the charging assembly including: a first connection interface configured to connect to the smoking substitute device when the smoking substitute device is received in the holder, and a second connection interface configured to connect to the wireless charging module when the wireless charging module is attached to the housing.

Optionally, the wireless charging module forms at least part of an outer surface of the charging device when the wireless charging module is attached to the charging device. This can help to maximise transfer of power between an external charger and the wireless charging module, which improves operating efficiency and reduces charging time to achieve a particular state of charge.

Optionally, the wireless charging module forms a face plate of the charging device when the wireless charging module is attached to the charging device.

Optionally, the housing has a first length and a first width and wherein the wireless charging module has a length substantially equal to the first length and a width substantially equal to the first width. Thus, only the depth of the device changes before and after the wireless charging module is fitted. This minimises changes to the form factor of the device.

Optionally, the wireless charging module has a recess for receiving all, or at least a portion of, the wireless charging module.

Optionally, the wireless charging module and the housing comprise fixings configured to retain the wireless charging module to the housing, wherein the fixings comprise at least one of: mechanical fixings and magnetic fixings. Magnetic fixings may be provided on an outer surface of the housing of the charging device, such as flush with the outer surface or raised from the outer surface, or they may be provided beneath the outer surface of the housing, i.e. concealed from view.

Optionally, the wireless charging module is configured to attach to the housing by a push fit or a press fit.

Optionally, the wireless charging module is configured to attach to the housing by a sliding fit.

Optionally, the wireless charging module comprises an antenna and electrical circuitry coupled to the antenna and to the second connection interface.

Optionally, the charging device comprises a first battery within the housing, wherein the charging assembly is configured to use a power signal received from an output of the wireless charging module to charge the first battery.

Optionally, the charging assembly is configured to use a power signal received from an output of the wireless charging module to charge the smoking substitute device via the first connection interface.

Optionally, the charging device comprises a third connection interface configured to connect to an external device, wherein the charging assembly is configured to use a power signal received from an output of the wireless charging module to charge the external device via the third connection interface.

Optionally, the charging assembly is configured to provide a power signal to the wireless charging module to charge an external device via the wireless charging module.

Optionally, the charging device comprises a further module which is removably attachable to the housing in a same position as the wireless charging module. The further module is one of: a module which lacks wireless charging module; a dummy module configured to cover the second connection interface. Thus, the functionality may be changed when the further module is removed from the charging device and the wireless charging module is attached to the charging device. By providing a further module, the second connection interface is protected from damage. Also, any fixings configured to retain the wireless charging module (and the further module) to the housing are protected.

In an embodiment, the cavity (holder) may be integrally formed as part of the housing, which may facilitate construction of the housing. For example, the housing may be formed as a single piece of moulded or 3D-printed plastic.

In some embodiments, the charging device may be in the form of a portable charging case.

The charging device of the first aspect of the invention may be included in a smoking substitute kit. Thus, according to a second aspect of the present invention, there is provided a smoking substitute kit comprising: a charging device according to the first aspect of the invention; and a smoking substitute device. Any features described above in relation to the first aspect of the invention may be included in the second aspect of the invention.

According to another aspect of the present invention, there is provided a wireless charging module for use with a charging device according to the first aspect.

Optionally, the smoking substitute device is longer than the holder such that, when the smoking substitute device is inserted into the holder, a portion of the smoking substitute device protrudes from the charging device, and wherein the smoking substitute device is operable for vapour generation when the smoking substitute device is inserted into the holder. It is to be understood that the smoking substitute device includes a main body with or without a consumable. Therefore, a depth of the holder may be slightly less than a length of the main body (e.g. by 3mm or so), such that an end of the main body protrudes from the holder and, when a consumable is attached to the main body, an end of the consumable protrudes from the holder. In this way, the consumable and the main body may be separately manually removed from the holder.

The charging device may be a charge case in which the holder is a cavity which is sized so as to receive a majority or an entirety of the main body of the smoking substitute device. For example, the cavity may have a depth between 80mm and 100mm, and preferably between 85mm and 95mm, and more preferably between 87mm and 93mm, and still more preferably between 89mm and 91mm. Conveniently, the cavity may have a depth of about 90mm.

It is to be understood that the smoking substitute device may be used (e.g. to generate vapour for inhalation) whilst it is connected to and being charged by the charging device. In this scenario, the smoking substitute device may include a main body and a consumable.

Herein, a smoking substitute device may refer to an e-cigarette or vaping device.

The smoking substitute device may include a main body and a consumable, the consumable being engageable with the main body. The main body may have an engagement end which is engageable with the consumable, the engagement end being on an opposite end of the main body relative to an end portion which includes a connector that is arranged to engage the connection interface of the charging device when the main body is received in a holder of the charging device.

The holder of the charging device may have a shape that is complementary to a shape of the main body, e.g. so that an interference fit may be formed between the holder and the main body when the main body is received in the holder.

The consumable is configured for engagement with the main body (e.g. so as to form a closed smoking substitute device). The consumable may also be referred to as a "cartridge" or "pod" for the smoking substitute device. For example, the consumable may comprise components of the system that are disposable, and the main body may comprise non-disposable or non-consumable components (e.g. power supply, controller, sensor, etc.) that facilitate the delivery of aerosol by the consumable. In such an embodiment, an aerosol former (e.g. e-liquid) may be replenished by replacing a used consumable with an unused consumable.

Alternatively, the consumable may be reusable. In such embodiments an aerosol former (e.g. e-liquid) of the consumable may be replenished by re-filling e.g. a reservoir of the consumable with the aerosol former (rather than replacing a consumable component of the apparatus).

In light of this, it should be appreciated that some of the features described herein as being part of the consumable may alternatively form part of a main body.

The main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitting.

Thus, the consumable and main body may comprise one or more engagement portions for engagement with one another. In this way, one end of the consumable may be coupled with the main body, whilst an opposing end of the consumable may define a mouthpiece of the smoking substitute device.

The smoking consumable may comprise a reservoir configured to store an aerosol former, such as an e-liquid. The e-liquid may, for example, comprise a base liquid and e.g. nicotine. The base liquid may include propylene glycol and/or vegetable glycerine. The e-liquid may also contain a flavourant, to provide a flavour to the user.

The reservoir may be in the form of a tank. At least a portion of the tank may be translucent. For example, the tank may comprise a window to allow a user to visually assess the quantity of e-liquid in the tank. A housing of the main body may comprise a corresponding aperture (or slot) or window that may be aligned with a translucent portion (e.g. window) of the tank. The reservoir may be referred to as a "clearomizer" if it includes a window, or a "cartomizer" if it does not.

The consumable may comprise a passage for fluid flow therethrough. The passage may extend through (at least a portion of) the consumable, between openings that may define an inlet and an outlet of the passage. The outlet may be at a mouthpiece of the consumable. In this respect, a user may draw fluid (e.g. air) into and through the passage by inhaling at the outlet (i.e. using the mouthpiece). The passage may be at least partially defined by the tank. The tank may substantially (or fully) define the passage. In this respect, the tank may surround the passage.

The consumable may comprise an aerosol-generator. The aerosol generator may comprise a wick. The aerosol generator may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source (e.g. a battery). Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The main body may comprise a second battery (e.g. a rechargeable battery or Li-ion battery). The second battery is arranged to power the smoking substitute device, for example, so that the smoking substitute device can generate vapour for inhalation by a user. The second battery may be electrically connected (or connectable) to a heater of the smoking substitute device (e.g. when engaged with the main body). A connector (e.g. in the form of a USB connector) may be provided on the end portion of the main body for recharging this battery via engagement with the connection interface in the holder of the charging device.

The consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable.

The electrical interface may also be used to identify the consumable from a list of known types. For example, the consumable may have a certain concentration of nicotine and the electrical interface may be used to identify this. The electrical interface may additionally or alternatively be used to identify when a consumable is connected to the main body.

The main body may comprise an interface, which may, for example, be in the form of an RFID reader, a barcode or QR code reader. This interface may be able to identify a characteristic (e.g. a type) of a consumable engaged with the main body. In this respect, the consumable may include any one or more of an RFID chip, a barcode or QR code, or memory within which is an identifier and which can be interrogated via the interface.

The main body may comprise a controller, which may include a microprocessor. The controller may be configured to control the supply of power from the power source to the heater of the smoking substitute apparatus (e.g. via the electrical contacts). A memory may be provided and may be operatively connected to the controller. The memory may include non-volatile memory. The memory may include instructions which, when implemented, cause the controller to perform certain tasks or steps of a method.

The main body may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supplied to the heater of the consumable in response to a puff detection by the sensor. The control may be in the form of activation of the heater in response to a detected puff. That is, the smoking substitute device may be configured to be activated when a puff is detected by the puff sensor. The puff sensor may form part of the consumable or the main body.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1A is a schematic side view of a smoking substitute device that may be used with a charging device according to an embodiment of the invention, where the smoking substitute device is in an engaged position;
Figure 1B is a schematic side view of the smoking substitute device of Figure 1A, where the smoking substitute device is in a disengaged position;
Figure 1C is a schematic end view of the smoking substitute device of Figure 1A;
Figure 1D is a cross-sectional diagram of a consumable of the smoking substitute device of Figure 1A;
Figure 2A is a schematic view of a charging device, in accordance with an embodiment of the invention;
Figure 2B is a schematic view of a smoking substitute kit including a smoking substitute device and the charging device of Figure 2A;
Figure 2C is a schematic view of a charging device, in accordance with an embodiment of the invention, with a wireless charging module for attaching to the charging device;
Figure 3A is a perspective view of a charging device and a wireless charging module according to an embodiment of the invention, with the wireless charging module separated from the charging device;
Figure 3B is a perspective view of a charging device and a wireless charging module according to an embodiment of the invention, with the wireless charging module attached to the charging device;
Figure 4A is a perspective view of a charging device and a wireless charging module according to another embodiment of the invention, with the wireless charging module separated from the charging device;
Figure 4B is a perspective view of a charging device and a wireless charging module according to another embodiment of the invention, with the wireless charging module attached to the charging device;
Figure 5 is a perspective view of a charging device and a wireless charging module, where the wireless charging module attaches to the charging device by a push fit;
Figure 6 is a perspective view of a charging device and a wireless charging module, where the wireless charging module attaches to the charging device by a sliding fit
Figure 7 is a schematic view of a charging device and a wireless charging module illustrating charging functionality when the wireless charging module receives power; and
Figure 8 is a schematic view of a charging device and a wireless charging module illustrating charging functionality when the wireless charging module transmits power.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

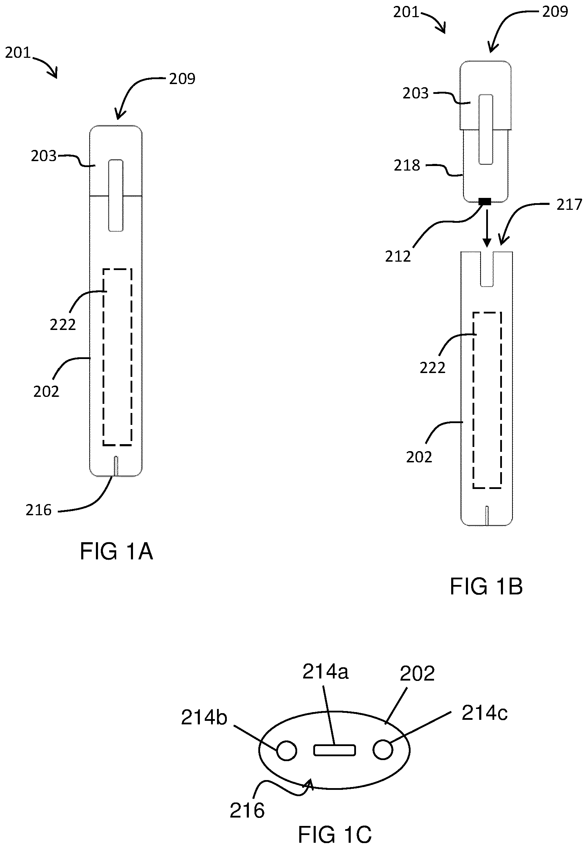

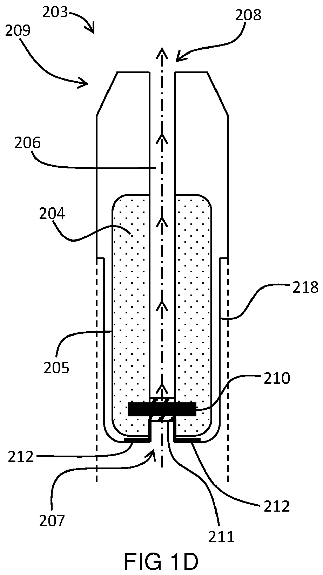

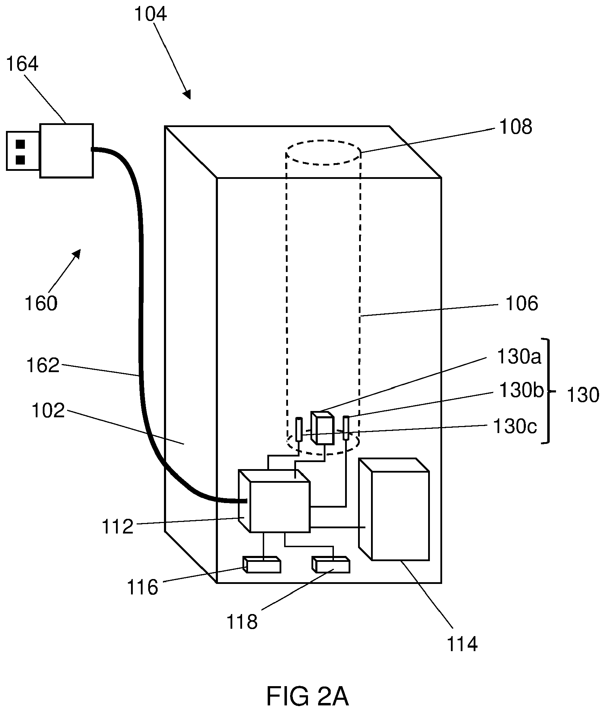

Figures 1A, 1B, 1C and 1D illustrate a smoking substitute device 201. The device 201 may, for example, be used with the charging device 104 of Figures 2A to 2B described below. In an embodiment, the smoking substitute device 201 is an electronic cigarette or a vaping device.

The device 201 comprises a main body 202, and a consumable (or "pod") 203. In the illustrated embodiment the consumable 203 is removable from the main body 202, so as to be a replaceable component of the device 201. In other words, the device 201 is a closed system. A cross-sectional view of the consumable 203 is shown in Figure 1D.

As is apparent from Figures 1A and 1B, the consumable 203 is configured to engage the main body 202. The main body 202 includes an engagement portion 217, which is in the form of a cavity disposed at a first end of the main body 202. The engagement portion 217 of the main body 202 is arranged to engage an engagement portion 218 on the consumable 203. Figure 1A shows the main body 202 and the consumable 203 in an engaged state, whilst Figure 1B shows the main body 202 and the consumable 203 in a disengaged state. When engaged, the engagement portion 218 of the consumable 203 is received in the cavity of the engagement portion 217 of the main body 202, and is retained in the engaged position by way of a snap-engagement mechanism. In other embodiments, the main body 202 and consumable 203 may be engaged by screwing one into (or onto) the other, through a bayonet fitting, or by way of an interference fit.

The device 201 is configured to vaporise an aerosol-former, which in the illustrated embodiment, is in the form of a nicotine-based e-liquid 204. The e-liquid 204 comprises nicotine and a base liquid including propylene glycol and/or vegetable glycerine. The e-liquid 204 may also comprise a flavourant, for producing a flavoured aerosol.

As is more apparent from Figure 1D, the e-liquid 204 is stored within a reservoir in the form of a tank 205 that forms part of the consumable 203. In the illustrated embodiment, the consumable 203 is a "single-use" consumable 203. That is, upon exhausting the e-liquid 204 in the tank 205, the intention is that the user disposes of the entire consumable 203. In other embodiments, the e-liquid (i.e. aerosol former) may be the only part of the system that is truly "single-use". That is, the tank may be refillable with e-liquid or the e-liquid may be stored in a non-consumable component of the system. For example, the e-liquid may be stored in a tank located in the main body or stored in another component that is itself not single-use (e.g. a refillable cartomizer).

The tank 205 surrounds, and thus defines a portion of, a passage 206 that extends between an inlet 207 and an outlet 208 at opposing ends of the consumable 203. In this respect, the passage comprises an upstream end at the end of the consumable 203 that engages with the main body 202, and a downstream end at an opposing end of the consumable 203 that comprises a mouthpiece 209 of the device 201. When the consumable 203 is engaged with the main body 202, a user can inhale (i.e. take a puff) via the mouthpiece 209 so as to draw air through the passage 206, and so as to form an airflow (indicated by arrows) in a direction from the inlet 207 to the outlet 208 of the passage 206. Although not illustrated, the passage 206 may be partially defined by a tube (e.g. a metal tube) extending through the consumable 203. The passage 206 is in fluid communication with a gap defined between the consumable 203 and the main body 202 (when engaged) such that air outside of the device 201 is drawn into the passage 206 (during an inhale).

The smoking substitute device 201 is configured to vaporise the e-liquid 204 for inhalation by a user. To provide this, the consumable 203 comprises a heater having of a porous wick 210 and a resistive heating element in the form of a heating filament 211 that is helically wound around a portion of the porous wick 210. The porous wick 210 extends across the passage 206 (i.e. transverse to a longitudinal axis of the passage 206) and opposing ends of the wick 210 extend into the tank 205 (so as to be submerged in the e-liquid 204). In this way, e-liquid 204 contained in the tank 205 is conveyed from the opposing ends of the porous wick 210 to a central portion of the porous wick 210 so as to be exposed to the airflow in the passage 206 (i.e. caused by a user inhaling).

The helical filament 211 is wound about this exposed central portion of the porous wick 210 and is electrically connected to an electrical interface in the form of electrical contacts 212 mounted at the end of the consumable that is proximate the main body 202 (when engaged). When the consumable 203 is engaged with the main body 202, the electrical contacts 212 contact corresponding electrical contacts (not shown) of the main body 202. The main body electrical contacts are electrically connected to a power source 222 of the main body 202, such that (in the engaged position) the filament 211 is electrically connected to the power source. In this way, power can be supplied by the main body 202 to the filament 211 in order to heat the filament 211. This heat is transferred from the filament 211 to the porous wick 210 which causes e-liquid 204 conveyed by the porous wick 210 to increase in temperature to a point at which it vaporises. The vaporised e-liquid becomes entrained in the airflow and, between the vaporisation point at the filament 211 and the outlet 208 of the passage 206, condenses to form an aerosol. This aerosol is then inhaled, via the mouthpiece 209, by a user of the device 201.

The power source of the main body 202 may be in the form of a battery 222 (i.e. the second battery; e.g. a rechargeable battery). Figure 1C shows an end face 216 of the main body 202. As is apparent from Figure 1C, the main body 202 includes one or more connectors 214a-c in the form of e.g. a USB or USB-C port for recharging the battery (e.g. 214a), and/or two contact pads (e.g. 214b and 214c). The connectors 214a-c are disposed on the end face 216 of the main body 202, which is at second end of the main body 202, opposite the first end comprising the engagement portion 217. The connectors 214a-c are arranged to engage a corresponding connection interface in a charging device to recharge the battery 222. It is to be understood that in one embodiment, only the connector 214a is present and, in another embodiment, only the connectors 214b and 214c are present.

The main body 202 may also comprise a controller that controls the supply of power from the power source to the main body electrical contacts (and thus to the filament 211). That is, the controller may be configured to control a voltage applied across the main body electrical contacts, and thus the voltage applied across the filament 211. In this way, the filament 211 may only be heated under certain conditions (e.g. during a puff and/or only when the system is in an active state). In this respect, the main body 202 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

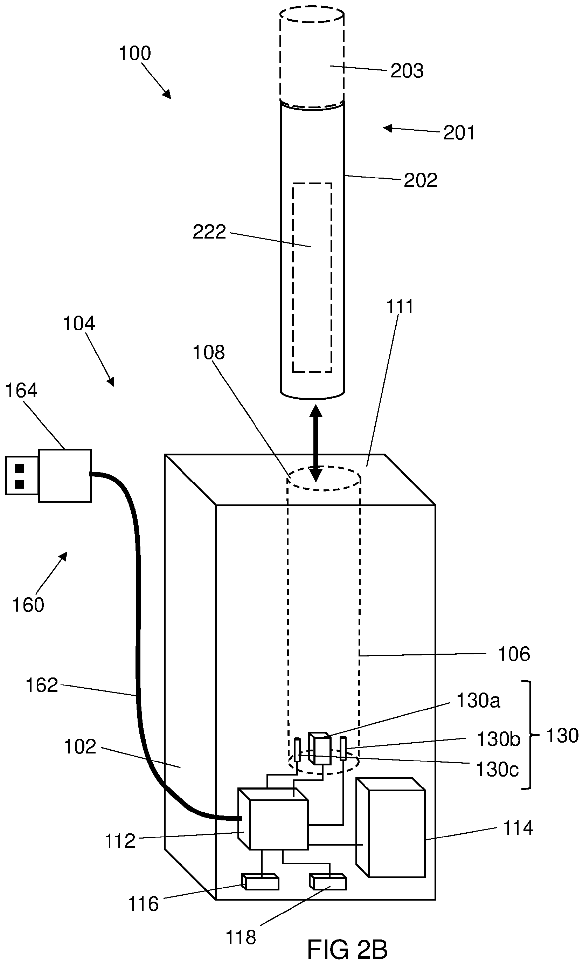

Figure 2A shows a charging device 104 and Figure 2B shows a smoking substitute kit 100 including the charging device 104 and a smoking substitute device 201. To aid clear understanding of the following description, it will be assumed that the charging device 104 is used with the smoking substitute device 201 of Figures 1A to 1D. However, it is to be understood that in some other embodiments, the charging device 104 can be used with a different smoking substitute device.

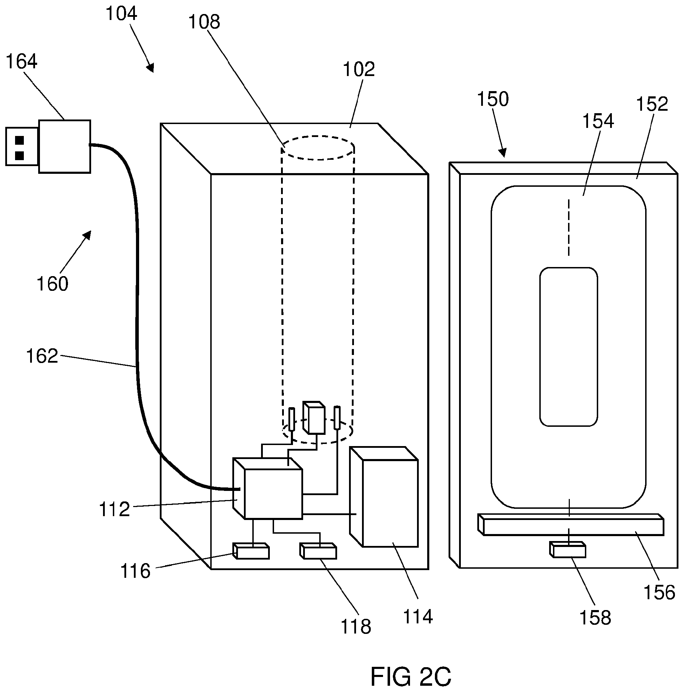

In the embodiment of Figures 2A, 2B and 2C, the charging device 104 takes the form of a portable charge case. The charging device 104 acts as a case to hold a smoking substitute device 201 and protect it as it is carried around during use. Also, the case may serve to charge a rechargeable battery 222 (aka the "second battery") of the smoking substitute device 201, as well as a rechargeable battery (aka the "third battery") of a further external device.

The charging device 104 includes a housing 102 having a holder 106 in the form of a cavity or recess defined in the housing 102 for receiving the main body 202 of the smoking substitute device 201. In particular, a cross-sectional shape of the main body 202 may correspond to a shape of the holder 106, so that an interference fit may be formed when the main body 202 is inserted into the holder 106. A first connection interface 130 is disposed within the holder 106. The first connection interface 130 is arranged for electrical connection to the main body 202 of the smoking substitute device 201 when the main body 202 is received within the holder 106. In particular, the connectors 214a-c (Figure 1C) on the end face 216 of the main body 202 are arranged to engage the first connection interface 130 disposed in the holder 106 when the main body 202 is received in the holder 106. In this manner, when the main body 202 is received in the holder 106 of the charging device 104, the main body 202 may be connected to the charging device via the connectors 214a-c on its end face 216, so that the battery in the main body 202 may be recharged.

In the example shown, the first connection interface 130 includes connectors 130a-c. The connector 130a may for example be a male connector, such as a USB plug, which cooperates with a connector 214a (e.g. a female connector, such as a female USB socket) on the smoking substitute device 201. The connectors 130b and 130c may include connection pins, such as pogo pins, which cooperate with connection pads 214b and 214c on the smoking substitute device 201. In an alternative embodiment, the first connection interface 130 may include only the connector 130a, or only the pins 130b and 130c.

The holder 106 is in the form of a cavity having a generally tubular cross-section and so defines a generally tubular void. Specifically, the cavity includes a sidewall which terminates in an aperture 108 at one end (e.g. the top end, as shown in Figure 2B) and terminates in a base wall at the other end (e.g. the bottom end, as shown in Figure 2A). Since the cavity receives the smoking substitute device 201, a shape of the cross-section of the cavity accommodates a shape of the cross-section of the smoking substitute device 201. For example, the cavity of the charging device 104 and the main body 202 of the smoking substitute device 201 may both have a generally oval shaped cross-section, wherein the respective sizes of the two ovals are such that the main body 202 fits within the cavity. That is, the oval of the main body 202 may have the same shape but a slightly reduced area compared to the oval of the cavity. The oval shape may be truncated at each end along its maximum diameter. In an embodiment, the maximum and minimum widths of the oval shape of the main body 202 may be about 20mm and about 12mm, respectively, whereas the maximum and minimum widths of the oval shape of the cavity may be about 22mm and about 14mm, respectively.

Additionally, in an embodiment, the cavity has a depth which corresponds with a length of the main body 202 of the smoking substitute device 201. For instance, a depth of the cavity may be approximately equal to a length of the main body 202. For example, if the maximum length of the main body 202 is about 90mm, the cavity may have a maximum depth between 80mm and 100mm (e.g. main body length ±10mm), and preferably between 85mm and 95mm (e.g. main body length ±5mm), and more preferably between 87mm and 93mm (e.g. main body length ±3mm), and still more preferably between 89mm and 91mm (e.g. main body length ±1mm). Alternatively, the cavity may have a maximum depth of about 90mm (e.g. the main body length). In this way, when the smoking substitute device 201 is inserted into the cavity, the engagement portion 217 end of the main body 202 may be substantially flush with the cavity aperture 306. As such, the consumable 203 may be inserted into the main body 202 when the main body 202 is received within the cavity such that part of the consumable 203 is substantially proud of the charging device 104. The consumable 203 may have a total length of about 45mm but, when inserted into the main body 202, the consumable 203 may only protrude about 20mm beyond the main body 102. As such, when the smoking substitute device 201 is inserted into the holder 106, the consumable 203 may protrude about 20mm beyond the charging device 104. In this way, the smoking substitute device 201 may be used to generate vapour whilst engaged with the charging device 104. Alternatively, a depth of the cavity may be slightly less than a length of the main body 202 such that a portion of the main body 202 protrudes from and above the aperture 108 when it is connected in the cavity for charging. For example, the amount of protrusion may be between 9mm and 2mm, and preferably between 7mm and 3mm, and more preferably between 5mm and 4mm. Alternatively, the amount of protrusion may be about 3mm. In this way, a user is able to grab hold of the protruding portion of the main body 202 in order to remove it from the cavity. This may be particularly advantageous if no consumable 203 is connected to the main body 202.

The first connection interface 130 is positioned in a base portion of the holder 106, for example, on or proximal to the base wall. Specifically, the first connection interface 130 may be fixed to the base wall and may protrude at least partially into the cavity void. The connector 130a may be one part of a USB connection, for example, a USB-C plug or a micro USB plug. That is, the connection interface 130a may be one part of a two-part symmetrical connection (i.e. USB-C) or be one part of a two-part asymmetrical connection (i.e. micro-USB, Type-A, Type-B or Type-AB USB connectors). Additionally, the connection pins 130b and 130c, which are configured to contact corresponding contact pads (e.g. 214b and 214c) may also constitute either a two-part asymmetric or a two-part symmetric connection (i.e. a first part includes the two pins and the second part includes the two pads).

It is to be understood that a two-part *asymmetric* electrical connection is considered to be a two-part electrical connection between first and second asymmetric electrical connectors. These first and second connectors are asymmetric in the sense that they can only be mechanically and electrically connected together (i.e. engaged) in only one way or orientation. For example, a specific part (e.g. a top) of the first connector must be aligned with a specific part (e.g. a top) of the second connector before the two connectors can be engaged together to form a mechanical and electrical connection. That is, the two connectors cannot be engaged together to form the mechanical and electrical connection if these two specific parts are not aligned.

On the other hand, a two-part *symmetric* electrical connector is considered to be a two-part electrical connection between first and second connectors that can be mechanically and electrically connected together (i.e. engaged) in either or any way or orientation. For example, a top or bottom of the first connector may be aligned with either a top or bottom of the second connector for the two connectors can be engaged together to form a mechanical and electrical connection.

Figure 2C shows the charging device 104 and a wireless charging module 150. The wireless charging module 150 comprises a housing 152 which is configured to attach, in a removable manner, to the housing 102 of the charging device 104. Figure 2C shows the wireless charging module 150 separately from the charging device 104 to clearly show the functional components. In use, the wireless charging module 150 is attached to the housing 102 of the charging device 104.

The charging device 104 comprises a second connection interface 118 which is configured to connect to a connection interface 158 on the wireless charging module 150. The second connection interface 118 is configured for electrical connection to the connection interface 158 of the wireless charging module 150 when the wireless charging module 150 is attached to the housing 102 of the charging device 104. The connection interfaces 118, 158 carry a power signal. The connection interfaces 118, 158 may also carry a data signal for use in controlling the wireless charging module 150.

The wireless charging module 150 comprises an antenna 154 and electrical/electronic circuitry 156. The antenna 154 is configured to inductively couple with a power signal transmitted by an external wireless charger (not shown). The electrical/electronic circuitry 156 converts a signal received by the antenna 154 into an output power signal for outputting to the charging device 104. A typical transmission frequency of the power signal is in the range of tens or hundreds of kilohertz (kHz). The electrical/electronic circuitry 156 may be configured to rectify the signal received by the antenna 154 and to output a direct current (DC) power signal to the charging device 104.

The charging device 104 may further include a third connection interface 160 disposed on a side of the housing 102, and which is arranged for connection to an external device to charge the external device (i.e. to charge a battery in the external device). The third connection interface 160 comprises a cable 162 and an electrical connector 164 disposed at an end of the cable 162. The cable 162 is electrically connected to control circuitry 112 inside the housing 102, and exits the housing via an aperture. In the example showed, the connector 164 is a male USB connector, so it may be connected to an external device having a corresponding female USB connector. However, in other examples, different types of connector may be used. The external device may be any suitable electronic device having a rechargeable battery, and which is connectable to the third connection interface 160. In one example, the external device may be a further smoking substitute device (i.e. in addition to the smoking substitute device 201 which is receivable in the holder 106). Then, the charging device 104 may be used to charge two smoking substitute devices simultaneously. In another example, the external device may be a smartphone, portable music player, or other personal electronic device.

The charging device 104 includes a first battery 114 which is disposed within the housing 102. The first battery 114 is a rechargeable battery, and is operable to charge a smoking substitute device that is connected to the first connection interface 130, and/or an external device that is connected to the third connection interface 160.

The charging device 104 may further include a fourth connection interface 116 in the form of a connection port which is disposed on an outer surface of the housing 102. For example, the connection port 116 may be a USB connector, such as, a female USB socket. The connection port may serve to connect the charging device 104 to an external power source (not shown), e.g. by connecting a cable (not shown) between the connection port and the external power source. The cable may be removably connectable to the connection port. Accordingly, a first end of the cable may terminate in a cooperating connector, such as, a male USB plug. Further, a second end of the cable may terminate in a connector for connecting the cable to an external power source, e.g. to a computer or mains supply. That is, the second end may also terminate in a USB connector, such as, a male USB plug. Although in the present example the cable is presented as having a USB connector, other types of connectors may also be used, depending upon the type of power source used. In this manner, the cable may be removably plugged into an external power source and the charging device 104 to provide power to the control circuitry 112 which can be used to charge the first battery 114, for example, when a charge of first battery 114 has been depleted from charging the smoking substitute device 201 and/or external device.

The control circuitry 112 is electrically coupled to the first battery 114 and the first connection interface 130 and the second connection interface 118. The control circuitry 112 is electrically coupled to the third connection interface 160 and/or to the fourth connection interface 116 if present. The control circuitry 112 is configured to control a power supply to and from the various components of the charging device 104. The control circuitry 112 is configured to control charging of the first battery 114 when the control circuitry 112 receives a power signal via the second connection interface 118 and/or the third connection interface 116.

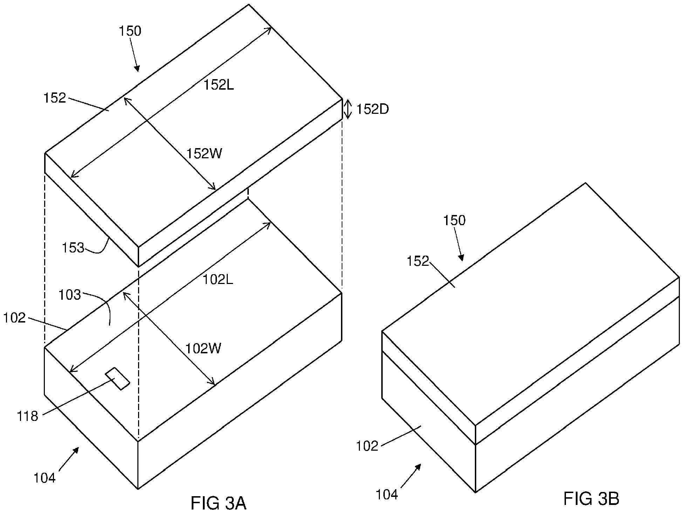

Figures 3A and 3B show an embodiment of the charging device 104 and a wireless charging module 150. Figure 3A shows the wireless charging module 150 separated from the charging device 104. Figure 3B shows the wireless charging module 150 attached to the charging device 104. The wireless charging module 150 has a housing 152 with a length 152L, a width 152W and a depth 152D. The width 152W of the housing 152 is the same, or similar to, the width 102W of the housing 102 of the charging device 104. The length 152L of the housing 152 is the same, or similar to, the length 102L of the housing 102 of the charging device 104. The depth 152D of the housing 152 is significantly less than the width 152W or the length 152L. The housing 152 may be in the form of a faceplate. The housing 152 may be of uniform depth 152D, with a top surface and a bottom surface which are planar and parallel. In alternative embodiments the depth may vary. For example, the housing 152 may have a curved outer surface on the side 157 facing the user to improve handling. The corners of the housing 152 may be rounded to improve handling. The outer surface 157 on the side facing the user may have one or more features to improve handling, such as raised features, e.g. ribs and/or recessed features, e.g. grooves. An example position of the second connection interface 118 is shown in Figure 3A. The second connection interface 118 is positioned on outer surface 103 and is directed orthogonally to the plane of surface 103, i.e. upwards in Figure 3A. More generally, the second connection interface 118 may be located at any suitable position on surface 103. A connector on the wireless charging module 150 may couple to the second connection interface 118 on the housing 102 in a direction which is orthogonal to the plane of surface 103.

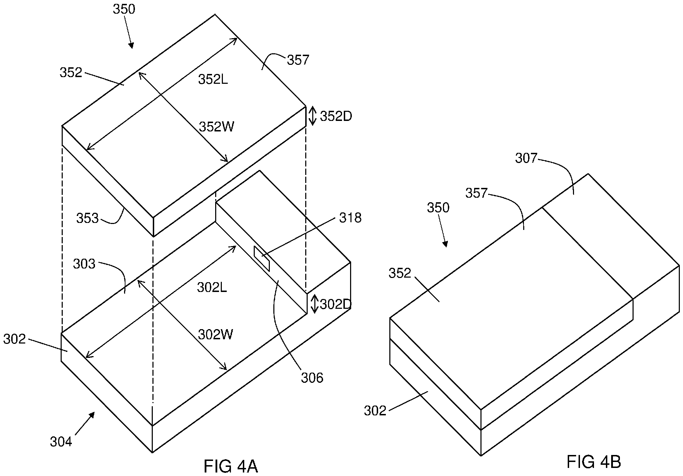

Figures 4A and 4B show another embodiment of a charging device 304 and a wireless charging module 350. Figure 4A shows the wireless charging module 350 separated from the charging device 304. Figure 4B shows the wireless charging module 350 attached to the charging device 304. The charging device 304 is similar to the charging device 104. The wireless charging module 350 is similar to the wireless charging module 150. This embodiment differs in that the housing 302 of the charging device 304 has a recess which is substantially matched to the size of the housing 352 of the wireless charging module 350. The wireless charging module 350 has a housing 352 with a length 352L, a width 352W and a depth 352D. The width 352W of the housing 352 is the same, or similar to, the width of the housing 302 of the charging device 304. The length 352L of the housing 352 is the same, or similar to, the length of the recess formed in the housing 302 of the charging device 304. The depth 352D of the housing 352 is significantly less than the width 352W or the length 352L. The depth 302D is the same (or similar to) depth 352D of the recess, length 302L is the same (or similar to) length 352L of the recess, and width 302W is the same (or similar to) width 352W of the recess. In other embodiments, the housing 352 may have a depth 352D which is larger than the depth of the recess in the housing 302.

The housing 352 may be of uniform depth 302D, with a top surface and a bottom surface which are planar and parallel. In alternative embodiments the depth may vary. For example, the housing 352 may have a curved outer surface on the side facing the user to improve handling. When the wireless charging module 350 is attached to the charging device 304, the overall assembled device 304, 350 has a continuous outer surface. That is, surface 357 aligns with surface 307 of the charging device.

An example position of the second connection interface 318 is shown in Figure 4A. The second connection interface 318 is positioned on edge surface 306 of the housing 302 and is directed orthogonally to the plane of surface 306. More generally, the second connection interface 318 may be located at any suitable position on edge surface 306, or on surface 303. A connector on the wireless charging module 350 may couple to the second connection interface 318 on the housing 302 in a direction which is orthogonal to the plane of surface 306.

The charging device 104, 304 may initially be provided in a state in which it lacks any module attached to the housing 102, 302. At some later time when the user wishes to upgrade the functionality of their charging device 104, 304 the wireless charging module 150, 350 is fitted to the charging device 104, 304. Alternatively, the charging device 104, 304 may initially be provided in a state in which a first module is fitted to the charging device 104, 304. The first module has the same, or a similar, size and/or shape as the wireless charging module 150, 350. The first module may have different technical functionality. For example, it does not support wireless charging functionality. The first module may not provide any functionality at all. For example, a dummy module may provide a function of covering the second connection interface on the housing 102, 302 until the wireless charging module 150, 350 is fitted. At some later time when the user wishes to upgrade the functionality of their charging device 104, 304 the first module is removed and replaced with the wireless charging module 150, 350.

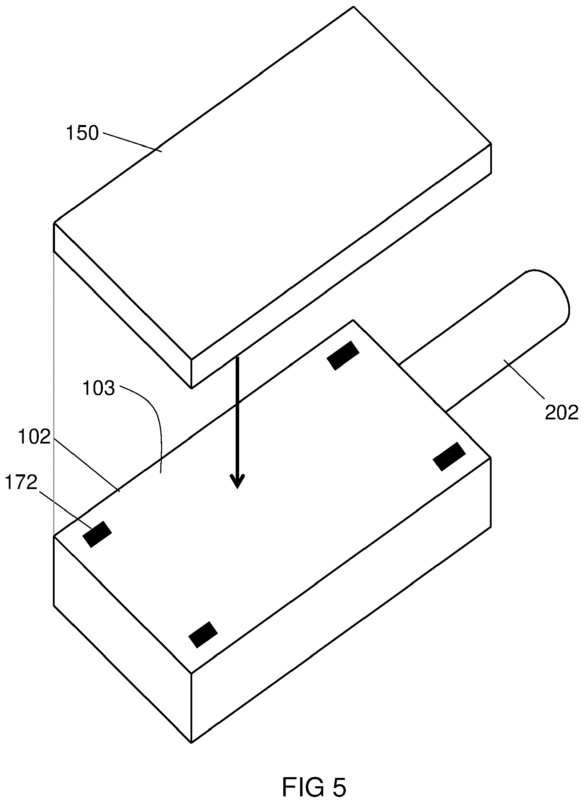

Figure 5 shows one possible way for attaching the wireless charging module 150 to the charging device 104. The wireless charging module 150 is pushed or pressed against the outer surface 103 of the housing 102. Fixings 172, such as magnetic fixings and/or mechanical fixings, retain the wireless charging module 150 against the housing 102. While four fixings 172 are shown near to corners of the region where the wireless charging module is attached, any suitable number of fixings may be provided. The fixings may be provided at other positions, such as centrally or along sides of the region where the wireless charging module is attached. While Figure 5 shows a wireless charging module 150 having a housing of the same length and width as the housing 102 of the charging device, this can also be applied to the embodiment of Figures 4A, 4B.

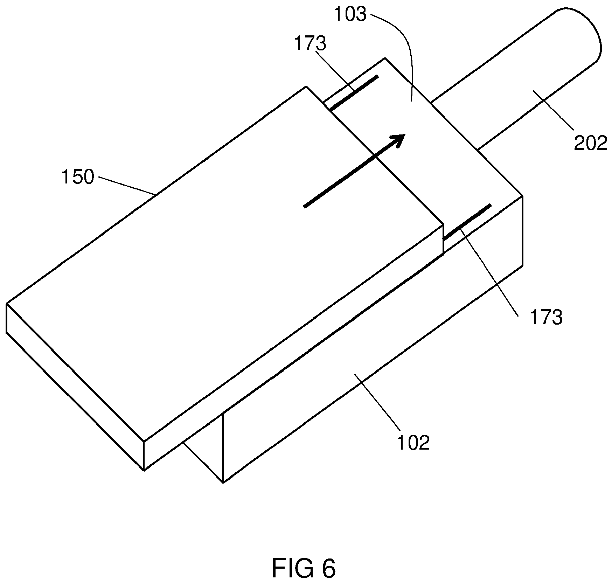

Figure 6 shows another possible way for attaching the wireless charging module 150 to the charging device 104. The wireless charging module 150 is slid against outer surface 103 of the housing 102 until it reaches a final attachment ("home") position as shown in Figure 3B or Figure 4B. Fixings 173, such as linear rails 173 may be provided on the outer surface of the housing 102. The rails may cooperate with channels or runners on the underside of the wireless charging module. Fixings may be provided to retain the wireless charging module 150 against the housing 102 when the wireless charging module 150 has reached the intended attachment position, i.e. when the wireless charging module 150 has fully slid along the rails and reached a position shown in Figure 3B. While two rails are shown, any suitable number of rails or other features to allow linear movement may be provided. The fixings may be provided at other positions, such as centrally or along sides of the region where the wireless charging module is attached. While Figure 6 shows a wireless charging module 150 having a housing of the same length and width as the housing 102 of the charging device, this can also be applied to the embodiment of Figures 4A, 4B. The final attachment ("home") position of the wireless charging module 150 is the position in which the wireless charging module 150 presses against the edge 306 of the recess. Edge 306 may include the second connection interface

The control circuitry 112 may be configured to detect whether the smoking substitute device is connected to the first connection interface 130. The control circuitry 112 may be configured to detect whether an external device is connected to the third connection interface 160. In this manner, the control circuitry may determine whether to supply power to the first connection interface 130 and/or third connection interface 160. The control circuitry 112 may be configured to detect when a power signal is received via the second connection interface 118.

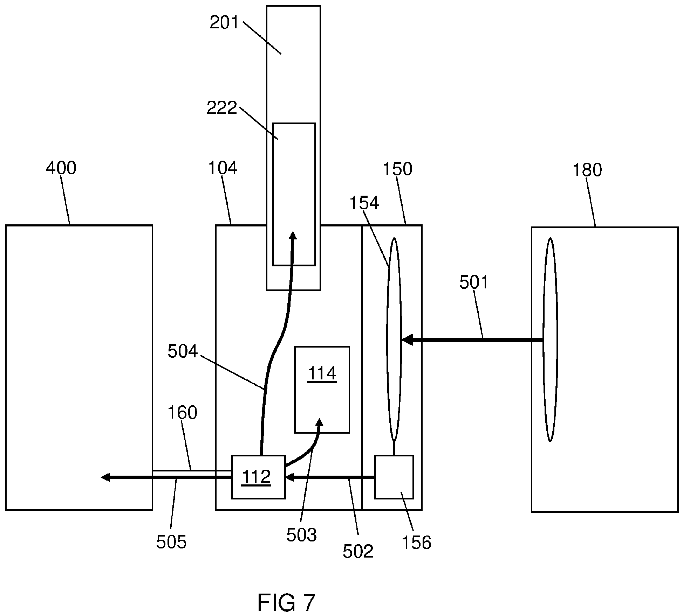

Figure 7 shows some possible ways of operating the charging device 104, when the wireless charging module 150 receives power from an external charger 180. As described above, antenna 154 of the wireless charging module 150 inductively couples with a power signal 501 transmitted by an external wireless charger 180. The electrical/electronic circuitry 156 converts a signal received by the antenna 154 into an output power signal 502 for outputting to the charging device 104. Control circuitry 112 may use the power signal to perform one or more of the following: (i) charge the battery 114 of the charging device 104 (path 503); (ii) charge the battery 222 of the smoking substitute device 201 (path 504); (iii) power or charge a battery of an external device 400 connected to interface 160 (path 505).

The control circuitry 112 may include one or more power switches (e.g. MOSFETs) to control power supplied to the various components. The control circuitry 112 may also include electrical components which are arranged to convert a voltage and/or current provided by the external power source to a desired level, to ensure that a desired power level may be delivered to the first battery 114.

In some embodiments, the control circuitry 112 may be configured to enable pass-through charging, such that the first battery 114 may be charged simultaneously with a first smoking substitute device connected to the first connection interface 130 and an external device connected to the second connection interface 160. Moreover, when the third connection interface 116 is connected to the external power source, the control circuitry 112 may be configured to control whether power from the first battery 114 and/or power received via the second connection interface is supplied to the first connection interface 130 and/or the third connection interface 160. Such control may be performed based on a charge state of the first battery 114. For example, where a charge state of the first battery 114 is low, a combination of power from the first battery 114 and the external power source may be supplied to the first connection interface 130 and/or third connection interface 160, in order to ensure that sufficient power is supplied to charge the smoking substitute device and/or external device.

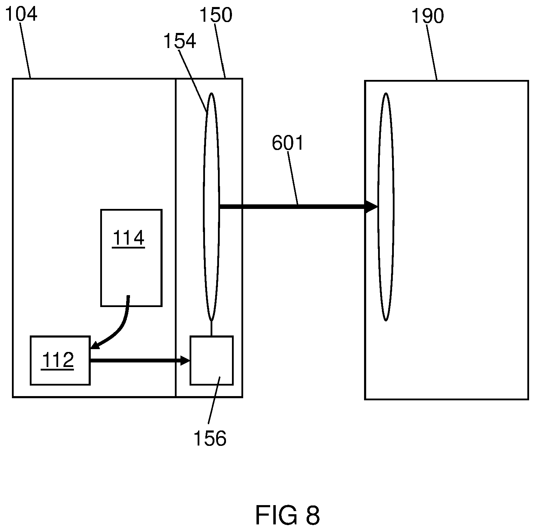

Figure 8 shows some possible ways of operating the charging device 104 with wireless charging, when the wireless charging module 150 transmits power to another device. Control circuitry 112 causes the battery 114 of the charging device 104 to supply energy to the wireless charging module 150. Antenna 154 transmits a power signal 601 which inductively couples with an antenna of an external device 190. In this way, the charging device 104 powers the external device 190.

The wireless charging module 150, 350 may also include a charge indicator (not shown) indicative of wireless charging.

The charging device 104 may comprise an exposed aperture or opening (108, Figures 2A-2C). Other embodiments (not shown) may comprise a cover which is moveably attached to the housing 102. The cover may be movable between a closed configuration and an open configuration. In the closed configuration the cover covers the aperture of the holder 106. The cover 110 forms an enclosure, or an enclosed space. In embodiments with a housing and a cover the wireless charging module 150, 350 may have a length which is the same, or similar to, the housing 102 and the cover. That is, the wireless charging module 150, 350 lies alongside the cover. Alternatively, the wireless charging module 150, 350 may have a length which is the same, or similar to, only the housing 102.

In the above-described embodiments, the charging devices 104 and 300 are shown as being substantially rectangular. However, it is to be understood that in some other embodiments, the shape of the charging device may vary provided that it can still contain the above-described components and perform the above-described functions. For example, the charging case may have a substantially oval or truncated-oval cross-section.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A charging device for charging a smoking substitute device, the charging device comprising:
a housing having a holder for receiving a smoking substitute device;
a wireless charging module which is removably attachable to the housing;
a charging assembly for charging the smoking substitute device, the charging assembly including:
a first connection interface configured to connect to the smoking substitute device when the smoking substitute device is received in the holder, and
a second connection interface configured to connect to the wireless charging module when the wireless charging module is attached to the housing.

2. A charging device according to claim 1, wherein the wireless charging module forms at least part of an outer surface of the charging device when the wireless charging module is attached to the charging device.

3. A charging device according to claim 2, wherein the wireless charging module forms a face plate of the charging device when the wireless charging module is attached to the charging device.

4. A charging device according to claim 2 or 3, wherein the housing has a first length and a first width and wherein the wireless charging module has a length substantially equal to the first length and a width substantially equal to the first width.

5. A charging device according to any one of the preceding claims wherein the wireless charging module and the housing comprise fixings configured to retain the wireless charging module to the housing, wherein the fixings comprise at least one of: mechanical fixings and magnetic fixings.

6. A charging device according to claim 5 wherein the wireless charging module is configured to attach to the housing by a push fit or a press fit.

7. A charging device according to claim 5 wherein the wireless charging module is configured to attach to the housing by a sliding fit.

8. A charging device according to any one of the preceding claims, wherein the wireless charging module comprises an antenna and electrical circuitry coupled to the antenna and to the second connection interface.

9. A charging device according to any one of the preceding claims comprising a first battery within the housing, wherein the charging assembly is configured to use a power signal received from an output of the wireless charging module to charge the first battery.

10. A charging device according to any one of the preceding claims, wherein the charging assembly is configured to use a power signal received from an output of the wireless charging module to charge the smoking substitute device via the first connection interface.

11. A charging device according to any one of the preceding claims comprising a third connection interface configured to connect to an external device, wherein the charging assembly is configured to use a power signal received from an output of the wireless charging module to charge the external device via the third connection interface.

12. A charging device according to any one of the preceding claims wherein the charging assembly is configured to provide a power signal to the wireless charging module to charge an external device via the wireless charging module.

13. A charging device according to any one of the preceding claims comprising a further module which is removably attachable to the housing in a same position as the wireless charging module, wherein the further module is one of: a module which lacks wireless charging module; a dummy module configured to cover the second connection interface.

14. A wireless charging module for use with a charging device according to any one of the preceding claims.

15. A smoking substitute kit comprising:
a smoking substitute device; and
a charging device according to any one of claims 1 to 13.
